Europäisches Patentamt

**European Patent Office**

**Office européen des brevets**

(19)

(11) Publication number: **0 173 770**
**A1**

(12) # EUROPEAN PATENT APPLICATION

(21) Application number: **84201224.7**

(22) Date of filing: **05.09.84**

(51) Int. Cl.⁴: **G 05 D 23/24**
**F 23 N 5/14, F 23 N 1/02**

(43) Date of publication of application:
**12.03.86 Bulletin 86/11**

(84) Designated Contracting States:
**BE DE FR GB IT NL**

(71) Applicant: **Furigas Electronics N.V.**
**Postbus 231 de Ruyterkade 51**
**Willemstad Curaçao Netherlands Antilles(NL)**

(72) Inventor: **Willemsen, Johannes Albertus Hendrikus**
**p/a J.C. van Markenstraat 19**
**NL-9403 AR Assen(NL)**

(74) Representative: **den Boer, Jan Johannes, Ir. et al,**
**Octrooibureau Polak & Charlouis Laan Copes van**
**Cattenburch 80**
**NL-2585 GD The Hague(NL)**

(54) **Room thermostat for a gas-fired central heating system.**

(57) This room thermostat has a temperature sensing element (t) which is connected in an electronic circuit and emits, dependent on the room temperature, a voltage which is compared with a voltage output to a potentiometer (p2) by means of which the desired room temperature is adjusted.

The differential voltage determines the through flow position of an electromagnetically actuated gas valve of the central heating system.

./...

EP 0 173 770 A1

0173770

Title: Room thermostat for a gas-fired central heating system.

The invention relates to a room thermostat for a gas-fired central heating system, said thermostat having a temperature sensing element, which in response to the difference between the room temperature and a selected temperature value controls the operation of the burners of the central heating system.

Such room thermostats are generally known. They control the room temperature by emitting an electric voltage signal as soon as the temperature decreases below a selected value. This signal opens, after amplification, an electromagnetically actuated gas valve whereby the burners are ignited. If thereafter the temperature rises to the selected value the emited signal falls off and the gas valve closes. This is an on-off control. Since the temperature sensing element of the thermostat is usually a bi-metal, a certain delay in the operation occurs, i.e. the room temperature decreases to below the set value before the gas valve is reopened.

The invention aims at having the central heating system release more heat per unity of time in proportion as the room temperature is lower or differs more from the selected temperature. The heat quantity released is adapted to the need, whereby the burners of the CH-system remain burning more continuously and as a result thereof the number of on-off-switching moments of the burners is strongly decreased, as well as the inoperation losses of the system while the efficiency of the consumption is increased. For it is that as according the temperature approximates the set temperature the burners are going to burn with less intensity, so that the preselected temperature is approached a-symptotically.

This is achieved according to the invention in that the temperature sensing element comprises a resistor element having a positive temperature coefficient or a semi-conductor and thereby influences a partial voltage depending on the value of the room temperature whereby the voltage difference of said voltage and a voltage which depends on the set temperature value is supplied through an amplifier to an electromagnetically actuated gas valve, the opening crosssection of which is dependent on said voltage difference and controls the gas quantity, which is supplied to the burner or burners.

The temperature sensing element  constituted by a temperature sensitive resistor or a semi-conductor emits a voltage which depends on the room temperature, which voltage is compared with a voltage which depends on the temperature which has been adjusted in the thermostat. According as the difference between the room temperature and the adjusted temperature is greater the gas valve is opened wider, so that more heat per unity of time is produced in the central heating system.

It will be possible to simultaneously positively control the quantity of air, which is necessary for burning the gas, through the same thermostat if the amplified voltage difference is also supplied to an electromagnetically actuated air slide valve or to an actuating motor for said slide valve or to a ventilator motor, such that the quantity of combustion air which is supplied to the burner (s) is controlled dependent on the difference between the actual and the requested roomtemperature.

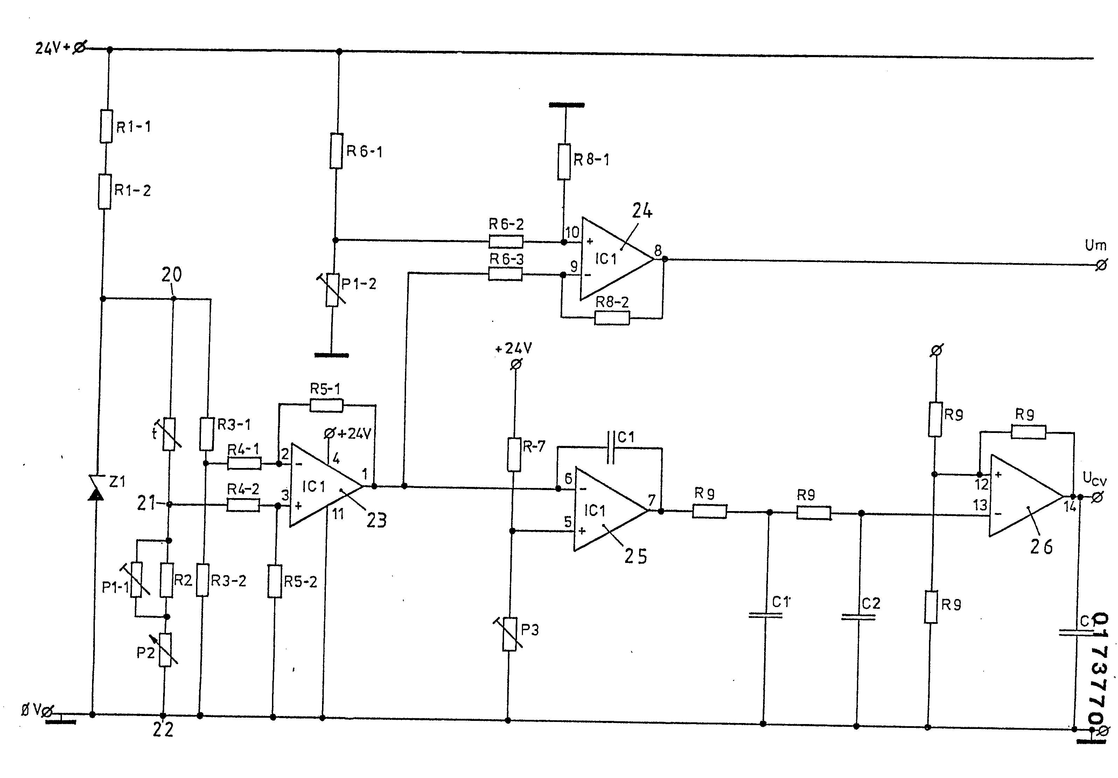

The invention will be further explained below with reference to the drawing in which an embodiment, given as an example, of an electronic circuit for the room thermostat according to the invention is shown.

A Zenerdiode Z1 is connected between a direct current output of 24 V, obtained from an alternating current mains through a transformer and a rectifier, and ground, in series with resistors R1-1 and R1-2. A semi-conductor 2 and in series therewith a resistor R2 and a potentiometer B2 are connected in parallel to the Zenerdiode. The semi-conductor 2 is the temperature sensing element or temperature sensor of the thermostat. The resistance of said semi-conductor is dependent on the room temperature. The output resistance of the semi-conductor is e.g. 2000 Ohm at $25^{\circ}$C and the variation in resistance may be e.g. 0.75 % of the output resistance per degree C, the resistance increasing if the temperature increases and decreasing when the temperature decreases. A temperature scale (not shown) is connected with the potentiometer P2 and therewith the desired temperature in the room may be adjusted. If the adjusted temperature is modified, also the voltage issued by the potentiometer changes.

In first instance it may be assumed that when the room temperature is equal to the preselected temperature, the voltage loss between points 20 and 21 along the sensor 2 is equal to the loss in voltage between the points 21 and 22 along the selecting or adjusting element. This will be discussed below in more detail.

In the point 21 then a voltage difference = 0 is present. If now the temperature in the room departs from the adjusted temperature, then in the point 21 a differential voltage is generated, which is connected through a resistor R4-2 to an input 3 of an amplifier 23, which sends an amplified voltage from its output 1 through elements which will be discussed later on to an output Ucv, to which the central heating boiler may be connected.

Between the circuit point of 24 V and ground, a potentiometer P1-2 is provided through the intermediary of a resistor R6-1. Thereby a temperature difference $\Delta T$ of e.g. $1.5^{\circ}C$ may be adjusted such that the burners of the boiler are only ignited if the room temperature has decreased $1.5^{\circ}$ below the desired temperature as adjusted on the potentiometer $P_2$. The voltage of the potentiometer P1-2 is connected through the indicated resistors to the input 10 of an amplifier 24, the amplified output voltage of which is sent through the output 8 to a connector terminal $U_m$ of the thermostat. $U_m$ varies dependent on the voltage difference between the inputs 2 and 3 of the amplifier 23. The amplifier 23 has been tuned such that it starts having an output at e.g. a $\Delta T$ of $1.5^{\circ}C$. This signal is again amplified in the amplifier 24 such that $U_m$ is controlled between 0 and 24 V. $U_m$ is a function of $\Delta T$ but reversed e.g. $U_m$ increases according as $\Delta T$ decreases. Has $\Delta T$ become equal to 0, then Ucv is made to issue a voltage of 0 V (if $\Delta T$ is greater than $0,5^{\circ}C$ then Ucv is again made to issue 24 V). Ucv only has a switching function. It can only switch off if the end temperature is reached. In order to prevent swinging, a threshold for the temperature decrease in the room is provided, e.g. of 0.5 $\Delta$T.

The output voltage Um is a function of the temperature difference between the adjusted value and the room temperature. $P_3$ is the adjust-resistor in order to permit determining the point when Ucv should be switched from high to low, i.e. in order to determine the switching off point of the room thermostat.

As said, by the thermostat according to the invention the heat released by the boiler may be controlled in dependence the value of the temperature difference between the room temperature and the desired or adjusted temperature. Thereby there is not the usual swinging of the boiler operation but the boiler burns in adaptation to the temperature difference for longer periods. Thereby minimal fluelosses and a high efficiency of the boiler are obtained.

------

CLAIMS

1. A room thermostat for a gas fired central heating system comprising a temperature sensing element, which dependent on the difference between the room temperature and a selected temperature value controls the operation of the burner of the CH-system, characterized in that the temperature sensing element comprises a resistor element having a positive temperature coefficient or a semi-conductor (2) and thereby influences a partial voltage in dependence on the value of the room temperature, whereby the differential voltage of said voltage and a voltage dependent on the selected temperature value (P2) is sent through an amplifier (23) to an electromagnetically actuated gas valve, the opening crosssection of which is dependent on said differential voltage, said valve controlling the gas quantity supplied to the burner or burners.

2. Room thermostat according to claim 1, characterized in that the amplified differential voltage is simultaneously sent to an electromagnetically actuated air slide valve or to an adjusting motor for said slide valve, or to a ventilator motor, such that the quantity of combustion air supplied to the burner or burners is controlled dependent on the difference between the actual and the desired room temperature.

0173770

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-A-8 300 518 (FURIGAS ELECTRONICS) * Whole document * | 1,2 | G 05 D 23/24 F 23 N 5/14 F 23 N 1/02 |
| Y | US-A-3 201 672 (J. LOUIS) * Column 2, lines 5-48; figure * | 1,2 | |
| Y | FR-A-2 444 230 (MATSUSHITA) * Page 3, line 28 - page 5, line 24; figures 1-3 * | 1 | |
| Y | DE-B-2 356 367 (SIEMENS) * Column 3, line 20 - column 4, line 6; figure * | 2 | |
| A | GB-A-1 418 828 (MATSUSHITA) * Page 2, line 128 - page 3, line 18; page 3, line 127 - page 4, line 20; figures 5,10 * | 1 | **TECHNICAL FIELDS SEARCHED (Int. Cl.4)** |
| A | US-A-2 366 501 (W. GILLE) * Page 2, left-hand column, lines 3-13; figure 1 * | 1 | G 05 D F 23 N |
| A | EP-A-0 030 736 (SERVO INSTRUMENT) | | |
| A | GB-A-2 076 184 (DAINCHI) | | |

The present search report has been drawn up for all claims

| Place of search | Date of completion of the search | Examiner |
|---|---|---|
| THE HAGUE | 15-04-1985 | HELOT H.V. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document